(19) Europäisches Patentamt
European Patent Office
Office européen des brevets

(11) **EP 4 024 259 B1**

(12) # EUROPEAN PATENT SPECIFICATION

(45) Date of publication and mention
of the grant of the patent:
**04.06.2025 Bulletin 2025/23**

(21) Application number: **19947704.3**

(22) Date of filing: **30.09.2019**

(51) International Patent Classification (IPC):
**G06F 30/20** $^{(2020.01)}$ **G06F 30/27** $^{(2020.01)}$
**G06F 111/10** $^{(2020.01)}$ **G06F 119/08** $^{(2020.01)}$

(52) Cooperative Patent Classification (CPC):
**G06F 30/27;** G06F 2111/10; G06F 2119/08

(86) International application number:
**PCT/CN2019/109675**

(87) International publication number:
**WO 2021/062755 (08.04.2021 Gazette 2021/14)**

(54) **LINEARIZATION PROCESSING METHOD AND DEVICE FOR NONLINEAR MODEL, AND STORAGE MEDIUM**

LINEARISIERUNGSVERARBEITUNGSVERFAHREN UND -VORRICHTUNG FÜR EIN NICHTLINEARES MODELL UND SPEICHERMEDIUM

PROCÉDÉ ET DISPOSITIF DE TRAITEMENT DE LINÉARISATION, ET SUPPORT D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.07.2022 Bulletin 2022/27**

(73) Proprietor: **Siemens Aktiengesellschaft**
**80333 München (DE)**

(72) Inventors:
• **WANG, De Hui**
**Beijing 100102 (CN)**
• **JIANG, Ning**
**Beijing 100102 (CN)**
• **ZHANG, Tuo**
**Beijing 201100 (CN)**
• **TIAN, Zhong Wei**
**Beijing 100102 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(56) References cited:
CN-A- 104 133 948    CN-A- 107 389 116
CN-A- 109 614 571    CN-A- 109 902 854
CN-A- 109 976 156    US-A1- 2016 034 421

• **GUILLERMO GALLEGO ET AL: "Optimal polygonal L1 linearization and fast interpolation of nonlinear systems", ARXIV.ORG, CORNELL UNIVERSITY LIBRARY, 201 OLIN LIBRARY CORNELL UNIVERSITY ITHACA, NY 14853, 30 December 2013 (2013-12-30), XP081344003, DOI: 10.1109/TCSI.2014.2327313**
• **KWANG Y LEE ET AL: "Neural Network-Based Modeling for A Large-Scale Power Plant", POWER ENGINEERING SOCIETY GENERAL MEETING, 2007. IEEE, IEEE, PI, 1 June 2007 (2007-06-01), pages 1 - 8, XP031118288, ISBN: 978-1-4244-1296-9**

**Description**

**TECHNICAL FIELD**

The present invention relates to the industrial field, and in particular to a linearization processing method and device for nonlinear models, and a computer-readable storage medium in integrated energy systems.

**BACKGROUND OF THE INVENTION**

Distributed energy systems (DESs) are considered to be an effective way of addressing unstable consumption of renewable energies. DESs are being built all over the world, including China, and there is an increasing demand for models used for operational optimization and for overall scheduling of the systems in terms of energy production and utilization. Previous researchers have developed specific models for operational optimization that are only applicable to systems with specific energy sources and components. Thus, their models do not meet the requirements of the emerging integrated energy services in practical implementation.

Therefore, it is necessary to provide a universal integrated energy system, to make full use of renewable energies, fossil fuels, residual heat and pressure, new energies and other forms of resources, so that they can supplement each other, and to establish innovative business models through flexible operation of energy sources, the grid, loads and energy storage facilities, to achieve high-quality, high-efficiency, and the most economical integrated regional supply of power, heating, cooling, gas, etc. to various loads with good environmental effects by use of smart means, so that the requirements of random changes in the terminal loads are met. Integrated energy systems promote the consumption capacity of renewable energies and improve the overall utilization rate of energy.

However, in the process of implementing an integrated energy system as above, models need to be established for a lot of equipment, which usually incorporates many nonlinear physical processes (also called underlying processes), such as the processes related to flow and pressure in the compressor of a gas turbine, the process of converting mechanical energy into pressure energy, etc., and thus the models of such equipment are generally nonlinear models. A nonlinear model usually has a complicated modeling process, but as a result the accuracy is relatively high. However, if the nonlinear models are directly used to run the simulation of an integrated energy system, the relatively low running speed of nonlinear models may affect the real-time performance of simulating an entire integrated energy system. Document KWANG Y LEE ET AL: "Neural

Network-Based Modeling for A Large-Scale Power Plant",POWER ENGINEERING SOCIETY GENERAL MEETING, 2007. IEEE, IEEE, PI, 1 June 2007 (2007-06-01), pages 1-8, XP031118288,ISBN: 978-1-4244-1296-9, is a relevant document in the field of linearising a non-linear model of a physical device.

**BRIEF SUMMARY OF THE INVENTION**

In view of this, a linearization processing method for nonlinear models is proposed in one aspect of the embodiments of the present invention, and a linearization processing device for nonlinear models and a computer-readable storage medium are proposed in another aspect, which are used for the linearization of some nonlinear models comprising nonlinear underlying processes, which are then used for the establishment of integrated energy systems.

In the embodiments of the present invention, a linearization processing method for nonlinear models is proposed, comprising: for a nonlinear model of each piece of equipment, determining a value range of each input parameter of the model; dividing the value range of each input parameter into a plurality of subintervals based on a plurality of interpolation points; determining a plurality of input sample values in each subinterval in a balanced manner; traversing input sample value combinations of each input parameter of the model, and using the nonlinear model to obtain an output sample value combination corresponding to each input sample value combination; and using all the input sample value combinations and the corresponding output sample value combinations to generate a tensor table.

In one implementation, dividing the value range of each input parameter into a plurality of subintervals based on a plurality of interpolation points is: based on a balancing criterion, dividing the value range of each input parameter into a plurality of subintervals based on a plurality of interpolation points.

In one implementation, determining a plurality of input sample values in each subinterval in a balanced manner is: determining a plurality of input sample values in each subinterval in a balanced manner based on a balancing criterion.

In one implementation, during simulation, the tensor table is looked up according to a current value of each input parameter, and the corresponding data found in the tensor table is used to perform interpolation processing to obtain a corresponding output value.

In one implementation, the nonlinear model of each piece of equipment is obtained in the following modeling method: determining complete design point data for each target nonlinear underlying process of each type of equipment; establishing a descriptive formula of a nonlinear underlying process by use of the ratio of a similarity parameter supported by a similarity criterion to a similarity parameter based on the design point data, to obtain a universal model of the nonlinear underlying process, wherein the universal model comprises a variable parameter that changes nonlinearly as a parameter of an actual working condition changes; constructing a machine learning algorithm between the parameter of the actual working condition and the variable parameter, and establishing a correlation between the machine learning algorithm and the universal model; taking the universal models of all the target universal nonlinear processes of each type of equipment and the correlated machine learning algorithms as a universal model of a type of equipment; for each target nonlinear underlying process of one specific piece of equipment of a type of equipment, obtaining historical data of the parameter of the actual working condition and the variable parameter corresponding to a target nonlinear underlying process of the specific piece of equipment, and using the historical data to train the machine learning algorithm, to obtain a training model of the variable parameter of the target nonlinear underlying process; substituting the training model of the variable parameter of the target nonlinear underlying process into the universal model of the target nonlinear underlying process, to obtain a trained model of the target nonlinear underlying process of the specific piece of equipment; and taking the trained models of all the target nonlinear underlying processes of the specific piece of equipment as a trained model of the specific piece of equipment.

In one implementation, the variable parameter has a preset default value.

In one implementation, the equipment includes: gas turbines, heat pumps, internal combustion engines, steam turbines, waste heat boilers, absorption refrigerators, heating machines, multi-effect evaporators, water electrolyzers for hydrogen production, equipment for producing chemicals from hydrogen, reverse osmosis devices, fuel cells, and boilers; the target nonlinear underlying processes of each type of equipment include one or more of the following processes: a heat transfer process, a process of converting thermal energy to kinetic energy, a process of pipeline resistance, a process related to flow and pressure, a process of converting thermal energy to mechanical energy, a process of converting electrical energy to cold or heat energy, a rectification process, an evaporation process and a filtration process.

In the embodiments of the present invention, a linearization processing device for nonlinear models is proposed, comprising: a first processing module, used to, for a nonlinear model of each piece of equipment, determine a value range of each input parameter of the model; a second processing module, which divides the value range of each input parameter into a plurality of subintervals based on a plurality of interpolation points; a third processing module, used to determine a plurality of input sample values in each subinterval in a balanced manner; a fourth processing module, used to traverse input sample value combinations of each input parameter of the model, and use the nonlinear model to obtain an output sample value combination corresponding to each input sample value combination; and a fifth processing module, used to use all the input sample value combinations and the corresponding output sample value combinations to generate a tensor table.

In one implementation, the second processing module divides the value range of each input parameter into a plurality of subintervals based on a plurality of interpolation points based on a balancing criterion.

In one implementation, the third processing module determines a plurality of input sample values in each subinterval in a balanced manner based on a balancing criterion.

In one implementation, the system further comprises: a sixth processing module, used to, during simulation, perform interpolation of the tensor table according to a current value of each input parameter, to obtain a corresponding output value.

In one implementation, it further comprises: a first modeling module, used to determine complete design point data for each target nonlinear underlying process of each type of equipment; establish a descriptive formula of a nonlinear underlying process by use of the ratio of a similarity parameter supported by a similarity criterion to a similarity parameter based on the design point data, to obtain a universal model of the nonlinear underlying process, wherein the universal model comprises a variable parameter that changes nonlinearly as a parameter of an actual working condition changes; construct a machine learning algorithm between the parameter of the actual working condition and the variable parameter, and establish a correlation between the machine learning algorithm and the universal model; and take the universal models of all the target universal nonlinear processes of each type of equipment and the correlated machine learning algorithms as a universal model of a type of equipment; and a second modeling module, used to, for each target nonlinear underlying process of one specific piece of equipment of a type of equipment, obtain historical data of the parameter of the actual working condition and the variable parameter corresponding to a target nonlinear underlying process of the specific piece of equipment, and use the historical data to train the machine learning algorithm, to obtain a training model of the variable parameter of the target nonlinear underlying process; substitute the training model of the variable parameter of the target nonlinear underlying process into the universal model of the target nonlinear underlying process, to obtain a trained model of the target nonlinear underlying process of the specific piece of equipment; and take the trained models of all the target nonlinear underlying processes of the specific piece of equipment as a trained model of the specific piece of equipment.

Another linearization processing device for nonlinear models proposed in the embodiments of the present invention comprises: at least one memory and at least one processor, wherein: the at least one memory is used to store a computer program; the at least one processor is used to call the computer program stored in the at least one memory to execute the linearization processing method for nonlinear models described in any of the above implementations.

A computer-readable storage medium proposed in the embodiments of the present invention has a computer program stored thereon; the computer program can be executed by a processor and implement the linearization processing method described in any of the above implementations.

It can be seen from the above solution that a segmented linearization technique is used in the embodiments of the present invention to process nonlinear models to obtain a tensor table. In addition, in simulation application, interpolation is performed based on the tensor table, to obtain the required simulation data. A linearized equipment model runs faster and can meet the real-time requirement in simulation.

In addition, in the equipment modeling, a universal model of a nonlinear underlying process is obtained by establishing a descriptive formula of the nonlinear underlying process by use of the ratio of a similarity parameter supported by a similarity criterion to a similarity parameter based on design point data for each target nonlinear underlying process of each type of equipment, and the model is applicable to one type of equipment as a universal model. Moreover, the universal model comprises a variable parameter that changes nonlinearly as a parameter of the actual working condition changes, and the variable parameter can be obtained by machine learning through establishing a machine learning algorithm between the parameter of the actual working condition and the variable parameter, so that the universal model is capable of self-learning.

Furthermore, for one specific piece of equipment of the type of equipment, historical data of the parameter of the actual working condition and the variable parameter corresponding to a target nonlinear underlying process of the specific piece of equipment can be obtained for each target nonlinear underlying process, and the historical data is used to train the machine learning algorithm, to obtain a training model of the variable parameter of the target nonlinear underlying process; the training model of the variable parameter of the target nonlinear underlying process is substituted into the universal model of the target nonlinear underlying process, to obtain a trained model of the target nonlinear underlying process of the specific piece of equipment, i.e., an instantiated model conforming to the characteristics of the specific piece of equipment.

In addition, by setting the default value of the variable parameter in advance, it is possible to make the nonlinear model available where site conditions do not permit training the variable parameter, for example, when there is not enough historical data, etc.

Lastly, the modeling method in the embodiments of the present invention may be applied to various nonlinear processes of different types of equipment, with easy implementation and high accuracy.

## BRIEF DESCRIPTION OF THE DRAWINGS

The invention is defined in the independent claims.

The preferred embodiments of the present invention will be described in detail below with reference to the drawings, so that those skilled in the art will better understand the above and other features and advantages of the present invention. In the drawings:

Figure 1 is an exemplary flowchart of a linearization processing method for nonlinear models in the embodiments of the present invention.

Figure 2 is an exemplary flowchart of a modeling method for nonlinear models in the embodiments of the present invention.

Figure 3 is an exemplary structural diagram of a linearization processing device for nonlinear models in the embodiments of the present invention.

Figure 4 is an exemplary flowchart of another linearization processing device for nonlinear models in the embodiments of the present invention.

Figure 5 is an exemplary flowchart of another linearization processing device for nonlinear models in the embodiments of the present invention.

In the drawings, the following reference numerals are used:

| Numeral | Meaning |
| --- | --- |
| 101-105, 201-207 | Steps |
| 301 | First processing module |
| 302 | Second processing module |
| 303 | Third processing module |
| 304 | Fourth processing module |

(continued)

| Numeral | Meaning |
|---------|---------|
| 305 | Fifth processing module |
| 306 | Sixth processing module |
| 307 | First modeling module |
| 308 | Second modeling module |
| 51 | Memory |
| 52 | Processor |
| 53 | Bus |

## DETAILED DESCRIPTION OF THE EMBODIMENTS

The following example embodiments will further illustrate the present invention in detail in order to clarify its purpose, technical solution and advantages.

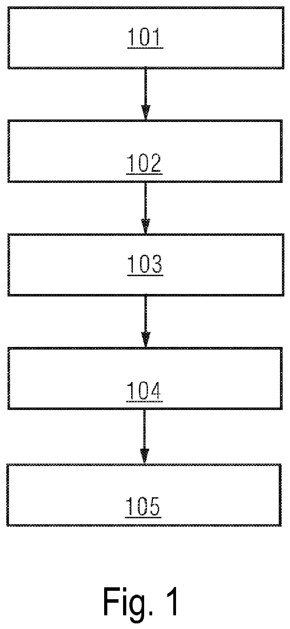

Figure 1 is an exemplary flowchart of a linearization processing method for nonlinear models in the embodiments of the present invention. As shown in Figure 1, the method may comprise the following steps: Step 101, for a nonlinear model of each piece of equipment, determining a value range of each input parameter of the model.

For example, the effective power range is 50% to 110% of the rated power, and there is also the range of change in the local ambient temperature, the range of change in the ambient pressure, etc.

Step 102, dividing the value range of each input parameter into a plurality of subintervals based on a plurality of interpolation points.

In this step, the value range of each input parameter may be divided into a plurality of subintervals based on a plurality of interpolation points based on a balancing criterion. Specifically, for the setting of interpolation points, more interpolation points may be set in regions with drastic nonlinear changes, while fewer interpolation points may be set in regions with slow nonlinear changes.

For example, 40 points are interpolated for the power range, 20 points are interpolated for the ambient temperature, 5 points are interpolated for the ambient pressure, etc.

Step 103, determining a plurality of input sample values in each subinterval in a balanced manner.

In this step, a plurality of input sample values in each subinterval may be determined in a balanced manner based on a balancing criterion.

For example, equal division may be used for power, ambient temperature, etc. in the real domain.

Step 104, traversing input sample value combinations of each input parameter of the model, and using the nonlinear model to obtain an output sample value combination corresponding to each input sample value combination.

For example, there is one set of outputs corresponding to each set of input sample values obtained by traversing, for example, efficiency output, or fuel consumption or emission output, operation cost output, etc.

Step 105, using all the input sample value combinations and the corresponding output sample value combinations to generate a tensor table.

For example, when the values of the abovementioned three dimensions of temperature, pressure and power are known, the value of efficiency can be obtained by interpolation through looking up the tensor table.

Specifically, during simulation by use of the model of the equipment, the tensor table is looked up according to a current value of each input parameter, and the corresponding value found in the tensor table is used to perform interpolation processing to obtain a corresponding output value. In the process, the current value of each input parameter may be a real value or an assumed value.

For example, there may be one or more tables for one piece of equipment, for example, one table where temperature, pressure and power correspond to efficiency, one table where temperature, pressure and power correspond to emission, or correspond to any other desired parameter. In the process, the interpolation algorithm may be selected based on actual conditions. For example, linear interpolation, nonlinear interpolation, etc. may be selected. In one example, linear interpolation may be used for points close to each other, while nonlinear interpolation may be used for points far away from each other.

The values of other output variables corresponding to the required temperature, pressure and performance can be obtained by spline interpolation of the three dimensions of temperature, pressure and power.

This general method uses a general program, and all kinds of specific models, for example, the models of heat pumps, internal combustion engines, heat exchangers, etc. can be processed by this segment of code as the tool.

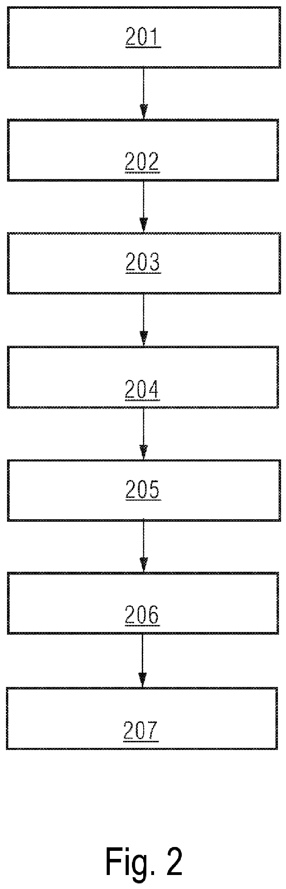

Figure 2 is an exemplary flowchart of a modeling method for nonlinear models in the embodiments of the present invention. As shown in Figure 2, the method may comprise the following steps:

Step 201, determining complete design point data for each target nonlinear underlying process of each type of equipment.

In this step, an underlying process may sometimes be referred to as a physical process, for example, a heat transfer process, a process for converting electrical energy, and a process related to flow and pressure as mentioned previously. For each device, the underlying processes of interest can be determined, i.e., the underlying processes that need to be modeled. These underlying processes that need to be modeled are referred to as target underlying processes, and those nonlinear target underlying processes can be referred to as target nonlinear underlying processes. For example, for gas turbines, the target nonlinear underlying processes may include: a process related to flow and pressure in the expansion turbine, a process of energy conversion between thermal energy and mechanical energy, etc.; for heat pumps, the target nonlinear underlying processes may include: a heat transfer process, a process of converting electrical energy to thermal energy, a chemical process of separate solution substances by use of high-temperature thermal energy, an electrochemical process, a pipeline resistance process, a process related to flow and pressure, etc. In addition, for equipment such as gas turbines, heat pumps, internal combustion engines, steam turbines, waste heat boilers, absorption refrigerators, heating machines, multi-effect evaporators, water electrolyzers for hydrogen production, equipment for producing chemicals from hydrogen, reverse osmosis devices, fuel cells, boilers, etc., the target nonlinear underlying processes of each piece of equipment may include one or more of the following: a process related to flow and pressure, a process of converting thermal energy to mechanical energy, a process of converting electrical energy to cold or heat energy, a process of pipeline resistance, a heat transfer process, a rectification process, an evaporation process, a filtration process, a chemical reaction process, an electrochemical process, etc.

For each nonlinear underlying process, the complete design point data can be restored according to the published basic design parameters and the common design point information provided to the user by the manufacturer. For example, for a general model of a process related to flow and pressure, its design point data may comprise the pressure ratio, air flow, etc., and, based on these design point data, relevant design parameters not available to users can be derived, such as the efficiency, inlet resistance, air extraction volume, etc.

Step 202, establishing a descriptive formula of the nonlinear underlying process by use of the ratio of a similarity parameter supported by a similarity criterion to a similarity parameter based on design point data, to obtain a universal model of the nonlinear underlying process; wherein the universal model comprises a variable parameter that changes as a parameter of an actual working condition changes.

In this step, a parameter of an actual working condition refers to a parameter of a specific piece of equipment that changes as the parameters of the actual working condition change. For example, it may be a dimension that changes as mechanical wear occurs after a long time of use, or the temperature that changes as the season changes, or relevant parameters that change as the work condition varies. The variable parameter may have a preset default value.

Since there may be different models for each type of equipment, for example, there may be compressors with different powers such as 5M, 50M, 500M, etc., in order to establish a universal model of compressors, it is necessary to adopt a similarity criterion to support a similarity parameter to replace a specific parameter value. For example, still taking the universal model of the above process related to flow and pressure as an example, the similarity parameters supported by the similarity criteria of flow, pressure and power are used instead of the specific parameters. For example, the similarity criteria of flow may be expressed by formula (1) below:

$$\frac{\frac{G1\sqrt{T1}}{P1}}{\frac{G0\sqrt{T0}}{P0}} \tag{1}$$

where G1 is the flow, T1 is the temperature, P1 is the pressure, G0 is the flow of the corresponding deign point, T0 is the temperature of the corresponding design point, and P0 is the pressure of the corresponding design point.

Accordingly, the universal model of a process related to flow and pressure may be expressed by formula (2) below:

$$\frac{\frac{G1\sqrt{T1}}{P1}}{\frac{G0\sqrt{T0}}{P0}} = \text{f(a × IGV angle, b × similarity rotation speed ratio)} \tag{2}$$

where f() is a function, coefficients a and b are variable parameters that change as the parameters of the actual working condition change, and in practical application, a default value may be set for the variable parameters a and b. IGV is the angle of the inlet adjustable guide vane.

Step 203, constructing a machine learning algorithm between the parameter of the actual working condition and the variable parameter.

In this step, a machine learning algorithm between the parameter of the actual working condition and the variable parameter may be constructed based on an intelligent neural network or a method supporting big data analysis for machine learning such as vector machines, etc.

Step 204, taking the universal models of all the target nonlinear underlying processes of each type of equipment and the correlated machine learning algorithms as a universal model of the type of equipment.

It can be seen that a nonlinear universal model can be established for each type of equipment through the above process. An integrated energy system platform can be constructed based on these universal models.

In practical application, after purchasing the integrated energy system platform, the user needs to build their own integrated energy system. At this point, each universal model needs to be associated with specific equipment on site, and thus the universal models need to be instantiated. Accordingly, the method may further comprise the following steps:
Step 205, for each target nonlinear underlying process of one specific piece of equipment of the type of equipment, obtaining historical data of the parameter of the actual working condition and the variable parameter corresponding to the target nonlinear underlying process of the specific piece of equipment, and using the historical data to train the corresponding machine learning algorithm, to obtain a training model of the variable parameter of the target nonlinear underlying process.

In this step, during specific training, a set of historical data of the parameter of the actual working condition is used as input sample values, the historical data of the variable parameter corresponding to the set of historical data of the parameter of the actual working condition is used as output sample values, and a large number of input sample values and the corresponding output sample values are used to train the machine learning algorithm, to obtain a self-learning model of the variable parameter, also referred to as a training model.

For example, still taking the abovementioned process related to flow and pressure as an example, the historical data of the relevant parameters of the actual working condition of a gas turbine on site and the historical data of the corresponding variable parameters can be obtained, to obtain the input and output sample sets, and a trained model of the variable parameters a and b can be obtained through training.

Step 206, substituting the training model of the variable parameter of the target nonlinear underlying process into the universal model of the target nonlinear underlying process, to obtain a trained model of the target nonlinear underlying process of the specific piece of equipment. The trained model is a self-learning model capable of learning.

In this step, according to the correlation between the machine learning algorithm and the universal model, the training model of the variable parameter of the target nonlinear underlying process can be substituted into the universal model of the target nonlinear underlying process.

For example, still taking the abovementioned process related to flow and pressure as an example, by inputting the current training model of the variable parameters a and b into formula (2) above, the universal model of the process related to flow and pressure of the compressor of the gas turbine on site can be obtained.

Step 207, taking the trained models of all the target nonlinear underlying processes of the specific piece of equipment as a universal model of the specific piece of equipment.

In actual use, the input parameters of the trained model may include the input parameters required for the trained models of all the target nonlinear underlying processes.

The linearization processing method for nonlinear models and one modeling method in the embodiments of the present invention are described in detail above, and the linearization processing device for nonlinear models and one modeling device in the embodiments of the present invention will be described in detail below. The devices in the embodiments of the present invention can be used to implement the method in the embodiments of the present invention. Details not disclosed in the device embodiments of the present invention can be found in the corresponding description of the method embodiments of the present invention, and will not be detailed here.

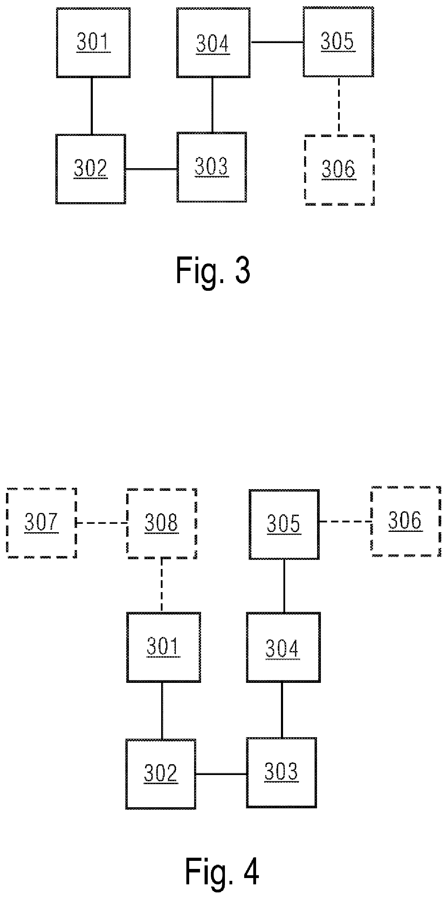

Figure 3 is an exemplary structural diagram of a linearization processing device for nonlinear models in the embodiments of the present invention. As shown in Figure 3, the device may comprise: a first processing module 301, a second processing module 302, a third processing module 303, a fourth processing module 304 and a fifth processing module 305.

The first processing module 301 is used to determine a value range of each input parameter of a nonlinear model of each piece of equipment.

The second processing module 302 divides the value range of each input parameter into a plurality of subintervals based on a plurality of interpolation points. In one specific implementation, the second processing module 302 may divide the value range of each input parameter into a plurality of subintervals based on a plurality of interpolation points based on a balancing criterion.

The third processing module 303 is used to determine a plurality of input sample values in each subinterval in a balanced manner. In one specific implementation, the third processing module 303 determines a plurality of input sample values in each subinterval in a balanced manner based on a balancing criterion.

The fourth processing module 304 is used to traverse input sample value combinations of each input parameter of the model, and use the nonlinear model to obtain an output sample value combination corresponding to each input sample value combination.

The fifth processing module 305 is used to use all the input sample value combinations and the corresponding output sample value combinations to generate a tensor table.

In other implementations, the linearization processing device for nonlinear models may further comprise, as shown by the part marked by dotted lines in Figure 3: a sixth processing module 306, used to, during simulation, perform interpolation of the tensor table according to a current value of each input parameter, to obtain a corresponding output value.

Figure 4 is an exemplary flowchart of another linearization processing device for nonlinear models in the embodiments of the present invention. As shown in Figure 4, based on the device shown in Figure 3, the device may further comprise: a first modeling module 307 and a second modeling module 308.

Between them, the first modeling module 307 is used to determine complete design point data for each target nonlinear underlying process of each type of equipment; establish a descriptive formula of a nonlinear underlying process by use of the ratio of a similarity parameter supported by a similarity criterion to a similarity parameter based on the design point data, to obtain a universal model of the nonlinear underlying process, wherein the universal model comprises a variable parameter that changes nonlinearly as a parameter of an actual working condition changes; construct a machine learning algorithm between the parameter of the actual working condition and the variable parameter, and establish a correlation between the machine learning algorithm and the universal model; and take the universal models of all the target universal nonlinear processes of each type of equipment and the correlated machine learning algorithms as a universal model of a type of equipment.

The second modeling module 308 is used to, for each target nonlinear underlying process of one specific piece of equipment of the type of equipment, obtain historical data of the parameter of the actual working condition and the variable parameter corresponding to the target nonlinear underlying process of the specific piece of equipment, and use the historical data to train the machine learning algorithm, to obtain a training model of the variable parameter of the target nonlinear underlying process; substitute the training model of the variable parameter of the target nonlinear underlying process into the universal model of the target nonlinear underlying process, to obtain a trained model of the target nonlinear underlying process of the specific piece of equipment; and take the trained models of all the target nonlinear underlying processes of the specific piece of equipment as a trained model of the specific piece of equipment.

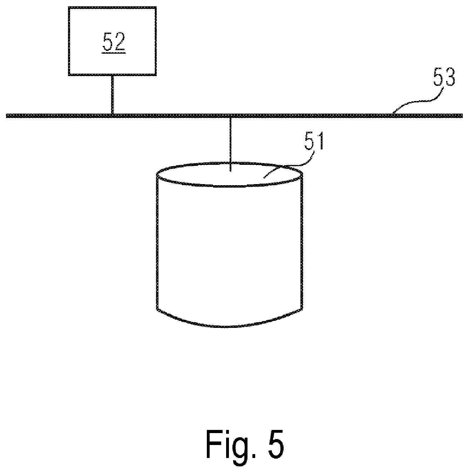

Figure 5 is a schematic structural diagram of another linearization processing device for nonlinear models in the embodiments of the present invention. As shown in Figure 5, the system may comprise: at least one memory 51 and at least one processor 52. In addition, some other components, for example, communication ports, etc., may also be comprised. These components communicate via a bus 53.

Specifically, the at least one memory 51 is used to store a computer program. In one implementation, the computer program may be understood as comprising each of the modules of the linearization processing device for nonlinear models as shown in Figure 3 or Figure 4. In addition, the at least one memory 51 may also store an operating system, etc. The operating system may be but is not limited to: an Android operating system, a Symbian operating system, a Windows operating system, a Linux operating system, etc.

The at least one processor 52 is used to call the computer program stored in the at least one memory 51 to execute the linearization processing method for nonlinear models described in the embodiments of the present invention. The processor 52 may be a CPU, a processing unit/module, an ASIC, a logic module, a programmable gate array, etc. It can receive and send data through the communication ports.

It should be noted that not all steps and modules in the above flowcharts and structural diagrams are necessary, and some steps or modules can be ignored based on actual needs. The sequence of execution of the steps is not fixed, and can be adjusted as needed. A functional division of the modules is used only to facilitate the description. In actual implementation, a module may be implemented by multiple modules, and the functions of multiple modules may be implemented by a single module. These modules may be located in a single device or in different devices.

It is understandable that the hardware modules in each embodiment above may be implemented mechanically or electronically. For example, a hardware module may comprise specially designed permanent circuits or logic devices (for example, dedicated processors, such as FPGA or ASIC) to complete specific operations. A hardware module may also comprise programmable logic devices or circuits temporarily configured by software (for example, general-purpose processors or other programmable processors) for performing specific operations. Whether to specifically use mechanical methods or dedicated permanent circuits or temporarily configured circuits (such as software configuration) to implement hardware modules may be determined according to cost and schedule considerations.

Moreover, a computer-readable storage medium is also provided in the embodiments of the present invention, which has a computer program stored thereon, which can be executed by a processor and implement the linearization processing method for nonlinear models described in the embodiments of the present invention. Specifically, a system or device equipped with a storage medium may be provided, and the software program code for implementing the functions of any of the above implementations is stored on the storage medium, so that a computer (or CPU or MPU) of the system or device reads and executes the program code stored in the storage medium. In addition, the operating system operating on the computer may also be used to perform part or all of the actual operations through instructions based on the program code. It is also possible to write the program code read from the storage medium to the memory provided in an expansion board inserted into the computer or to the memory provided in an expansion unit connected to the computer, and then the program code-based instructions cause the CPU, etc. mounted on the expansion board or the expansion unit to perform part or all of the actual operations, so as to implement the functions of any of the above embodiments. Implementations of the storage media used to provide the program code include floppy disks, hard disks, magneto-optical disks, optical disks (such as CD-ROM, CD-R, CD-RW, DVD-ROM, DVD-RAM, DVD-RW, DVD+RW), magnetic tapes, non-volatile memory cards and ROMs. Optionally, the program code may be downloaded from a server computer via a communication network.

It can be seen from the above solution that a segmented linearization technique is used in the embodiments of the present invention to process nonlinear models to obtain a tensor table. In addition, in simulation application, interpolation is performed based on the tensor table, to obtain the required simulation data. A linearized equipment model runs faster and can meet the real-time requirement in simulation.

In the equipment modeling, a universal model of a nonlinear underlying process is obtained by establishing a descriptive formula of the nonlinear underlying process by use of the ratio of a similarity parameter supported by a similarity criterion to a similarity parameter based on design point data for each target nonlinear underlying process of each type of equipment, and the model is applicable to one type of equipment as a universal model. Moreover, the universal model comprises a variable parameter that changes nonlinearly as a parameter of the actual working condition changes, and the variable parameter can be obtained by machine learning through establishing a machine learning algorithm between the parameter of the actual working condition and the variable parameter, so that the universal model is capable of self-learning.

Furthermore, for one specific piece of equipment of the type of equipment, historical data of the parameter of the actual working condition and the variable parameter corresponding to a target nonlinear underlying process of the specific piece of equipment can be obtained for each target nonlinear underlying process, and the historical data is used to train the machine learning algorithm, to obtain a training model of the variable parameter of the target nonlinear underlying process; the training model of the variable parameter of the target nonlinear underlying process is substituted into the universal model of the target nonlinear underlying process, to obtain a trained model of the target nonlinear underlying process of the specific piece of equipment, i.e., an instantiated model conforming to the characteristics of the specific piece of equipment.

In addition, by setting the default value of the variable parameter in advance, it is possible to make the nonlinear model available where site conditions do not permit training the variable parameter, for example, when there is not enough historical data, etc.

Lastly, the modeling method in the embodiments of the present invention may be applied to various nonlinear processes of different types of equipment, with easy implementation and high accuracy.

## Claims

1.  A computer implemented linearization processing method for nonlinear models, comprising:

    for a nonlinear model of each piece of equipment, determining a value range of each input parameter of the model (101);
    dividing the value range of each input parameter into a plurality of subintervals based on a plurality of interpolation points (102);
    determining a plurality of input sample values in each subinterval in a balanced manner (103);
    traversing input sample value combinations of each input parameter of the model, and using the nonlinear model to obtain an output sample value combination corresponding to each input sample value combination (104); and using all the input sample value combinations and the corresponding output sample value combinations to generate a tensor table (105) to be used for a simulation,
    wherein a nonlinear model of each piece of equipment is obtained in the following modeling method:

    determining complete design point data for each target nonlinear underlying process of each type of equipment (201); establishing a descriptive formula of the nonlinear underlying process by use of a ratio of a similarity parameter supported by a similarity criterion to a similarity parameter based on design point data, to obtain a universal model of the nonlinear underlying process; wherein the universal model comprises a variable parameter that changes as a parameter of an actual working condition of a specific piece of equipment changes (202);
    constructing a machine learning algorithm between the parameter of the actual working condition and the variable parameter, and establishing a correlation between the machine learning algorithm and the universal model (203);

taking the universal models of all the target nonlinear underlying processes of each type of equipment and the correlated machine learning algorithms as a universal model of the type of equipment (204);

for each target nonlinear underlying process of the specific piece of equipment of the type of equipment, obtaining historical data of the parameter of the actual working condition and the variable parameter corresponding to the target nonlinear underlying process of the specific piece of equipment, and using the historical data to train the machine learning algorithm, to obtain a training model of the variable parameter of the target nonlinear underlying process (205); and

substituting the training model of the variable parameter of the target nonlinear underlying process into the universal model of the target nonlinear underlying process, to obtain a trained model of the target nonlinear underlying process of the specific piece of equipment (206);

taking the trained models of all the target nonlinear underlying processes of the specific piece of equipment as the nonlinear model of the specific piece of equipment (207).

2. The linearization processing method for nonlinear models as claimed in claim 1, **characterized in that** dividing the value range of each input parameter into a plurality of subintervals based on a plurality of interpolation points is: based on a balancing criterion, dividing the value range of each input parameter into a plurality of subintervals based on a plurality of interpolation points.

3. The linearization processing method for nonlinear models as claimed in claim 1, **characterized in that** determining a plurality of input sample values in each subinterval in a balanced manner is: determining a plurality of input sample values in each subinterval in a balanced manner based on a balancing criterion.

4. The linearization processing method for nonlinear models as claimed in any of claims 1 to 3, **characterized in that**, during simulation, the tensor table is looked up according to a current value of each input parameter, and the corresponding data found in the tensor table is used to perform interpolation processing to obtain a corresponding output value.

5. The linearization processing method for nonlinear models as claimed in any one of the preceding claims, **characterized in that** the variable parameter has a preset default value.

6. The linearization processing method for nonlinear models as claimed in any one of the preceding claims, **characterized in that** the equipment includes: gas turbines, heat pumps, internal combustion engines, steam turbines, waste heat boilers, absorption refrigerators, heating machines, multi-effect evaporators, water electrolyzers for hydrogen production, equipment for producing chemicals from hydrogen, reverse osmosis devices, fuel cells, and boilers;

the target nonlinear underlying processes of each type of equipment include one or more of the following processes: a heat transfer process, a process of converting thermal energy to kinetic energy, a process of pipeline resistance, a process related to flow and pressure, a process of converting thermal energy to mechanical energy, a process of converting electrical energy to cold or heat energy, a rectification process, an evaporation process and a filtration process.

7. A linearization processing device for nonlinear models, wherein the device comprises:

a first processing module (301), used to determine a value range of each input parameter of a nonlinear model of each piece of equipment;

a second processing module (302), which divides the value range of each input parameter into a plurality of subintervals based on a plurality of interpolation points;

a third processing module (303), used to determine a plurality of input sample values in each subinterval in a balanced manner;

a fourth processing module (304), used to traverse input sample value combinations of each input parameter of the model, and use the nonlinear model to obtain an output sample value combination corresponding to each input sample value combination; and

a fifth processing module (305), used to use all the input sample value combinations and the corresponding output sample value combinations to generate a tensor table to be used for a simulation,

wherein the device further comprises:

a first modeling module (307), used to determine complete design point data for each target nonlinear underlying process of each type of equipment; establish a descriptive formula of a nonlinear underlying process by use of a ratio of a similarity parameter supported by a similarity criterion to a similarity parameter based on the design point data, to obtain a universal model of the nonlinear underlying process, wherein the universal model comprises a variable parameter that changes nonlinearly as a parameter of an actual working of a specific piece of equipment condition changes; construct a machine learning algorithm between the parameter of the actual working condition and the variable parameter, and establish a correlation between the machine learning algorithm and the universal model; and take the universal models of all the target universal nonlinear processes of each type of equipment and the correlated machine learning algorithms as a universal model of a type of equipment,

a second modeling module (308), used to, for each target nonlinear underlying process of one specific piece of equipment of the type of equipment, obtain historical data of the parameter of the actual working condition and the variable parameter corresponding to the target nonlinear underlying process of the specific piece of equipment, and use the historical data to train the machine learning algorithm, to obtain a training model of the variable parameter of the target nonlinear underlying process; substitute the training model of the variable parameter of the target nonlinear underlying process into the universal model of the target nonlinear underlying process, to obtain a trained model of the target nonlinear underlying process of the specific piece of equipment; and take the trained models of all the target nonlinear underlying processes of the specific piece of equipment as a nonlinear model of the specific piece of equipment.

8. The linearization processing device for nonlinear models as claimed in claim 7, **characterized in that** the second processing module divides the value range of each input parameter into a plurality of subintervals based on a plurality of interpolation points based on a balancing criterion.

9. The linearization processing device for nonlinear models as claimed in claim 7, **characterized in that** the third processing module determines a plurality of input sample values in each subinterval in a balanced manner based on a balancing criterion.

10. The linearization processing device for nonlinear models as claimed in any of claims 7 to 9, **characterized in that** it further comprises:

a sixth processing module (306), used to, during simulation, perform interpolation of the tensor table according to a current value of each input parameter, to obtain a corresponding output value.

11. A computer program executed by a linearization processing device, wherein the linearization processing device comprises: at least one memory (51) and at least one processor (52), wherein:

the at least one memory (51) is used to store the computer program; and
the at least one processor (52) is used to call the computer program stored in the at least one memory (51) to execute the linearization processing method for nonlinear models as claimed in any of claims 1 to 6.

12. A computer-readable storage medium, which has a computer program stored thereon; and the computer program can be executed by a processor to implement the linearization processing method for nonlinear models as claimed in any of claims 1 to 6.

**Patentansprüche**

1. Computerimplementiertes Linearisierungsverarbeitungsverfahren für nichtlineare Modelle, das Folgendes umfasst:

für ein nichtlineares Modell jedes Ausrüstungsteils Bestimmen eines Wertebereichs jedes Eingabeparameters des Modells (101);
Aufteilen des Wertebereichs jedes Eingabeparameters in mehrere Subintervalle, basierend auf mehreren Interpolationspunkten (102);
Bestimmen mehrerer Eingabeabtastwerte in jedem Subintervall auf eine ausgeglichene Weise (103);
Durchlaufen von Eingabeabtastwertkombinationen jedes Eingabeparameters des Modells und Verwenden des nichtlinearen Modells, um eine Ausgabeabtastwertkombination zu erhalten, die jeder Eingabeabtastwertkombination entspricht (104); und
Verwenden aller Eingabeabtastwertkombinationen und der entsprechenden Ausgabeabtastwertkombinationen, um eine Tensortabelle (105) zu erzeugen, die für eine Simulation verwendet werden soll,

wobei ein nichtlineares Modell jedes Ausrüstungsteils in dem folgenden Modellierungsverfahren erhalten wird: Bestimmen vollständiger Entwurfpunktdaten für jeden nichtlinearen zugrunde liegenden Zielprozess jedes Ausrüstungstyps (201);

Erstellen einer deskriptiven Formel des nichtlinearen zugrunde liegenden Prozesses unter Verwendung eines Verhältnisses eines Ähnlichkeitsparameters, der durch ein Ähnlichkeitskriterium unterstützt wird, zu einem Ähnlichkeitsparameter basierend auf Entwurfpunktdaten, um ein universelles Modell des nichtlinearen zugrunde liegenden Prozesses zu erhalten; wobei das universelle Modell einen variablen Parameter umfasst, der sich verändert, wenn sich ein Parameter eines tatsächlichen Arbeitszustands eines spezifischen Ausrüstungsteils verändert (202);

Aufbauen eines Maschinenlernalgorithmus zwischen dem Parameter der tatsächlichen Arbeitsbedingung und dem variablen Parameter und Erstellen einer Korrelation zwischen dem Maschinenlernalgorithmus und dem universellen Modell (203); Aufnehmen der universellen Modelle aller nichtlinearen zugrunde liegenden Zielprozesse jedes Ausrüstungstyps und der korrelierten Algorithmen für maschinelles Lernen als universelles Modell des Ausrüstungstyps (204);

für jeden nichtlinearen zugrunde liegenden Zielprozess des spezifischen Ausrüstungsteils des Ausrüstungstyps, Erhalten historischer Daten des Parameters der tatsächlichen Arbeitsbedingung und des variablen Parameters, die dem nichtlinearen zugrunde liegenden Zielprozess des spezifischen Ausrüstungsteils entsprechen, und Verwenden der historischen Daten zum Trainieren des Maschinenlernalgorithmus, um ein Trainingsmodell des variablen Parameters des nichtlinearen zugrunde liegenden Zielprozesses zu erhalten (205); und Ersetzen des Trainingsmodells des variablen Parameters des nichtlinearen zugrunde liegenden Zielprozesses in das universelle Modell des nichtlinearen zugrunde liegenden Zielprozesses, um ein trainiertes Modell des nichtlinearen zugrunde liegenden Zielprozesses des spezifischen Ausrüstungsteils zu erhalten (206);

Aufnehmen der trainierten Modelle aller nichtlinearen zugrunde liegenden Zielprozesse des spezifischen Ausrüstungsteils als nichtlineares Modell des spezifischen Ausrüstungsteils (207).

2. Linearisierungsverarbeitungsverfahren für nichtlineare Modelle nach Anspruch 1, **dadurch gekennzeichnet, dass** das Aufteilen des Wertebereichs jedes Eingabeparameters in mehrere Subintervalle basierend auf mehreren Interpolationspunkten Folgendes ist: basierend auf einem Ausgleichskriterium, Aufteilen des Wertebereichs jedes Eingabeparameters in mehrere Subintervalle basierend auf mehreren Interpolationspunkten.

3. Linearisierungsverarbeitungsverfahren für nichtlineare Modelle nach Anspruch 1, **dadurch gekennzeichnet, dass** das Bestimmen einer Vielzahl von Eingangsabtastwerten in jedem Subintervall in einer symmetrischen Weise Folgendes ist: Bestimmen einer Vielzahl von Eingangsabtastwerten in jedem Subintervall in einer symmetrischen Weise basierend auf einem Ausgleichskriterium.

4. Linearisierungsverarbeitungsverfahren für nichtlineare Modelle nach einem der Ansprüche 1 bis 3, **dadurch gekennzeichnet, dass** während der Simulation, die Tensortabelle gemäß einem aktuellen Wert jedes Eingabeparameters nachgeschlagen wird und die entsprechenden in der Tensortabelle gefundenen Daten verwendet werden, um eine Interpolationsverarbeitung durchzuführen, um einen entsprechenden Ausgabewert zu erhalten.

5. Linearisierungsverarbeitungsverfahren für nichtlineare Modelle nach einem der vorhergehenden Ansprüche, **dadurch gekennzeichnet, dass** der variable Parameter einen vorgegebenen Vorgabewert aufweist.

6. Linearisierungsverarbeitungsverfahren für nichtlineare Modelle nach einem der vorhergehenden Ansprüche, **dadurch gekennzeichnet, dass** die Ausrüstung Folgendes beinhaltet:

Gasturbinen, Wärmepumpen, Verbrennungsmotoren, Dampfturbinen, Abhitzekessel, Absorptionskühlschränke, Heizmaschinen, Mehreffektverdampfer, Wasserelektrolyseure für die Wasserstoffproduktion, Ausrüstung zur Herstellung von Chemikalien aus Wasserstoff, Umkehrosmose-Vorrichtungen, Brennstoffzellen und Kessel; die nichtlinearen zugrunde liegenden Zielprozesse jedes Ausrüstungstyps einen oder mehrere der folgenden Prozesse beinhalten: einen Wärmeübertragungsprozess, einen Prozess zum Umwandeln von Wärmeenergie in kinetische Energie, einen Prozess des Rohrleitungswiderstands, einen Prozess in Bezug auf Strömung und Druck, einen Prozess zum Umwandeln von Wärmeenergie in mechanische Energie, einen Prozess zum Umwandeln von elektrischer Energie in Kälte- oder Wärmeenergie, einen Rektifizierungsprozess, einen Verdampfungsprozess und einen Filtrationsprozess.

7. Linearisierungsverarbeitungsvorrichtung für nichtlineare Modelle, wobei die Vorrichtung Folgendes umfasst:

ein erstes Verarbeitungsmodul (301), das verwendet wird, um einen Wertebereich jedes Eingabeparameters eines nichtlinearen Modells jedes Ausrüstungsteils zu bestimmen;

ein zweites Verarbeitungsmodul (302), das den Wertebereich jedes Eingabeparameters basierend auf mehreren Interpolationspunkten in mehrere Subintervalle aufteilt;

ein drittes Verarbeitungsmodul (303), das verwendet wird, um mehrere Eingabeabtastwerte in jedem Subintervall auf eine ausgeglichene Weise zu bestimmen;

ein viertes Verarbeitungsmodul (304), das verwendet wird, um Eingabeabtastwertkombinationen jedes Eingabeparameters des Modells zu durchlaufen und das nichtlineare Modell zu verwenden, um eine Ausgabeabtastwertkombination zu erhalten, die jeder Eingabeabtastwertkombination entspricht; und

ein fünftes Verarbeitungsmodul (305), das verwendet wird, um alle Eingabeabtastwertkombinationen und die entsprechenden Ausgabeabtastwertkombinationen zu verwenden, um eine Tensortabelle zu erzeugen, die für eine Simulation verwendet werden soll,

wobei die Vorrichtung ferner Folgendes umfasst:

ein erstes Modellierungsmodul (307), das verwendet wird, um vollständige Entwurfpunktdaten für jeden nichtlinearen zugrunde liegenden Zielprozess jedes Ausrüstungstyps zu bestimmen; eine deskriptive Formel eines nichtlinearen zugrunde liegenden Prozesses unter Verwendung eines Verhältnisses eines Ähnlichkeitsparameters zu erstellen, der durch ein Ähnlichkeitskriterium unterstützt wird, zu einem Ähnlichkeitsparameter basierend auf den Entwurfpunktdaten, um ein universelles Modell des nichtlinearen zugrunde liegenden Prozesses zu erhalten, wobei das universelle Modell einen variablen Parameter umfasst, der sich nichtlinear ändert, wenn sich ein Parameter eines tatsächlichen Arbeitens eines spezifischen Ausrüstungszustands ändert; einen Maschinenlernalgorithmus zwischen dem Parameter der tatsächlichen Arbeitsbedingung und dem variablen Parameter aufzubauen und eine Korrelation zwischen dem Maschinenlernalgorithmus und dem universellen Modell zu erstellen; und die universellen Modelle aller universellen nichtlinearen Zielprozesse jedes Ausrüstungstyps und der korrelierten Maschinenlernalgorithmen als ein universelles Modell eines Ausrüstungstyps zu nehmen,

ein zweites Modellierungsmodul (308), das verwendet wird, um für jeden nichtlinearen zugrunde liegenden Zielprozess eines spezifischen Ausrüstungsteils des Ausrüstungstyps historische Daten des Parameters der tatsächlichen Arbeitsbedingung und des variablen Parameters, der dem nichtlinearen zugrunde liegenden Zielprozess des spezifischen Ausrüstungsteils entspricht, zu erhalten und die historischen Daten zum Trainieren des Maschinenlernalgorithmus zu verwenden, um ein Trainingsmodell des variablen Parameters des nichtlinearen zugrunde liegenden Zielprozesses zu erhalten; das Trainingsmodell des variablen Parameters des nichtlinearen zugrunde liegenden Zielprozesses in das universelle Modell des nichtlinearen zugrunde liegenden Zielprozesses zu ersetzen, um ein trainiertes Modell des nichtlinearen zugrunde liegenden Zielprozesses des spezifischen Ausrüstungsteils zu erhalten; und die trainierten Modelle aller nichtlinearen zugrunde liegenden Zielprozesse des spezifischen Ausrüstungsteils als ein nichtlineares Modell des spezifischen Ausrüstungsteils zu nehmen.

8. Linearisierungsverarbeitungsvorrichtung für nichtlineare Modelle nach Anspruch 7, **dadurch gekennzeichnet, dass** das zweite Verarbeitungsmodul den Wertebereich jedes Eingabeparameters basierend auf mehreren Interpolationspunkten basierend auf einem Ausgleichskriterium in mehrere Subintervalle aufteilt.

9. Linearisierungsverarbeitungsvorrichtung für nichtlineare Modelle nach Anspruch 7, **dadurch gekennzeichnet, dass** das dritte Verarbeitungsmodul mehrere Eingabeabtastwerte in jedem Subintervall basierend auf einem Ausgleichskriterium ausgeglichen bestimmt.

10. Linearisierungsverarbeitungsvorrichtung für nichtlineare Modelle nach einem der Ansprüche 7 bis 9, **dadurch gekennzeichnet, dass** sie ferner Folgendes umfasst:
ein sechstes Verarbeitungsmodul (306), das verwendet wird, um während der Simulation eine Interpolation der Tensortabelle gemäß einem aktuellen Wert jedes Eingabeparameters durchzuführen, um einen entsprechenden Ausgangswert zu erhalten.

11. Computerprogramm, das durch eine Linearisierungsverarbeitungsvorrichtung ausgeführt wird, wobei die Linearisierungsverarbeitungsvorrichtung Folgendes umfasst:
zumindest einen Speicher (51) und zumindest einen Prozessor (52), wobei:

der zumindest eine Speicher (51) verwendet wird, um ein Computerprogramm zu speichern; und
der zumindest eine Prozessor (52) verwendet wird, um das in dem zumindest einen Speicher (51) gespeicherte Computerprogramm aufzurufen, um das Linearisierungsverarbeitungsverfahren für nichtlineare Modelle nach einem der Ansprüche 1 bis 6 auszuführen.

12. Computerlesbares Speichermedium, auf dem ein Computerprogramm gespeichert ist; und das Computerprogramm kann durch einen Prozessor ausgeführt werden, um das Linearisierungsverarbeitungsverfahren für nichtlineare Modelle nach einem der Ansprüche 1 bis 6 zu implementieren.

**Revendications**

1. Procédé mis en œuvre par ordinateur de traitement de linéarisation pour modèles non linéaires, comprenant :

pour un modèle non linéaire de chaque partie d'un équipement, la détermination d'une plage de valeurs de chaque paramètre d'entrée du modèle (101) ;
la division de la plage de valeurs de chaque paramètre d'entrée en une pluralité de sous-intervalles sur la base d'une pluralité de points d'interpolation (102) ;
la détermination d'une pluralité de valeurs d'échantillon d'entrée dans chaque sous-intervalle de manière équilibrée (103) ;
le défilement de combinaisons de valeurs d'échantillon d'entrée de chaque paramètre d'entrée du modèle, et l'utilisation du modèle non linéaire pour obtenir une combinaison de valeurs d'échantillon de sortie correspondant à chaque combinaison de valeurs d'échantillon d'entrée (104) ; et
l'utilisation de toutes les combinaisons de valeurs d'échantillon d'entrée et des combinaisons de valeurs d'échantillon de sortie correspondantes pour générer une table tensorielle (105) à utiliser pour une simulation, dans lequel un modèle non linéaire de chaque partie de l'équipement est obtenu par le procédé de modélisation suivant :

la détermination de données complètes de point de conception pour chaque processus sous-jacent non linéaire cible de chaque type d'équipement (201) ;
l'établissement d'une formule descriptive du processus sous-jacent non linéaire à l'aide d'un rapport d'un paramètre de similarité pris en charge par un critère de similarité à un paramètre de similarité basé sur des données de point de conception, pour obtenir un modèle universel du processus sous-jacent non linéaire ; dans lequel le modèle universel comprend un paramètre variable qui change lorsqu'un paramètre d'un état de fonctionnement réel d'une partie spécifique de l'équipement change (202) ;
la construction d'un algorithme d'apprentissage automatique entre le paramètre de l'état de fonctionnement réel et le paramètre variable, et l'établissement d'une corrélation entre l'algorithme d'apprentissage automatique et le modèle universel (203) ;
la prise en compte des modèles universels de tous les processus sous-jacents non linéaires cibles de chaque type d'équipement et des algorithmes d'apprentissage automatique corrélés en tant que modèle universel du type d'équipement (204) ;
pour chaque processus sous-jacent non linéaire cible de la partie spécifique de l'équipement du type d'équipement, l'obtention de données historiques du paramètre de l'état de fonctionnement réel et du paramètre variable correspondant au processus sous-jacent non linéaire cible de la partie spécifique de l'équipement, et l'utilisation des données historiques pour entraîner l'algorithme d'apprentissage automatique, pour obtenir un modèle d'entraînement du paramètre variable du processus sous-jacent non linéaire cible (205) ; et
le remplacement du modèle d'entraînement du paramètre variable du processus sous-jacent non linéaire cible par le modèle universel du processus sous-jacent non linéaire cible, pour obtenir un modèle entraîné du processus sous-jacent non linéaire cible de la partie spécifique de l'équipement (206) ;
la prise en compte des modèles entraînés de tous les processus sous-jacents non linéaires cibles de la partie spécifique de l'équipement en tant que modèle non linéaire de la partie spécifique de l'équipement (207).

2. Procédé de traitement de linéarisation pour modèles non linéaires selon la revendication 1, **caractérisé en ce que** la division de la plage de valeurs de chaque paramètre d'entrée en une pluralité de sous-intervalles sur la base d'une pluralité de points d'interpolation comprend : sur la base d'un critère d'équilibrage, la division de la plage de valeurs de chaque paramètre d'entrée en une pluralité de sous-intervalles sur la base d'une pluralité de points d'interpolation.

3. Procédé de traitement de linéarisation pour modèles non linéaires selon la revendication 1, **caractérisé en ce que** la détermination d'une pluralité de valeurs d'échantillon d'entrée dans chaque sous-intervalle de manière équilibrée comprend : la détermination d'une pluralité de valeurs d'échantillon d'entrée dans chaque sous-intervalle de manière équilibrée sur la base d'un critère d'équilibrage.

4. Procédé de traitement de linéarisation pour modèles non linéaires selon l'une quelconque des revendications 1 à 3, **caractérisé en ce que**,
   pendant la simulation, la table tensorielle est consultée en fonction d'une valeur actuelle de chaque paramètre d'entrée, et les données correspondantes trouvées dans la table tensorielle sont utilisées pour exécuter un traitement d'interpolation pour obtenir une valeur de sortie correspondante.

5. Procédé de traitement de linéarisation pour modèles non linéaires selon l'une quelconque des revendications précédentes, **caractérisé en ce que** le paramètre variable a une valeur par défaut prédéfinie.

6. Procédé de traitement de linéarisation pour modèles non linéaires selon l'une quelconque des revendications précédentes, **caractérisé en ce que** l'équipement comprend : des turbines à gaz, des pompes à chaleur, des moteurs à combustion interne, des turbines à vapeur, des chaudières de récupération, des réfrigérateurs d'absorption, des machines de chauffage, des évaporateurs à effets multiples, des électrolyseurs d'eau pour la production d'hydrogène, des équipements de production de produits chimiques à partir de l'hydrogène, des dispositifs à osmose inverse, des piles à combustibles et des chaudières ; les processus sous-jacents non linéaires cibles de chaque type d'équipement comprennent un ou plusieurs des processus suivants : processus de transfert thermique, processus de conversion de l'énergie thermique en énergie cinétique, processus de résistance de canalisations, processus relatif au débit et à la pression, processus de conversion de l'énergie thermique en énergie mécanique, processus de conversion de l'énergie électrique en énergie de refroidissement ou de chauffage, processus de rectification, processus d'évaporation et processus de filtration.

7. Dispositif de traitement de linéarisation pour modèles non linéaires, le dispositif comprenant :

   un premier module de traitement (301), utilisé pour déterminer une plage de valeurs de chaque paramètre d'entrée d'un modèle non linéaire de chaque partie de l'équipement ;
   un deuxième module de traitement (302), qui divise la plage de valeurs de chaque paramètre d'entrée en une pluralité de sous-intervalles sur la base d'une pluralité de points d'interpolation ;
   un troisième module de traitement (303), utilisé pour déterminer une pluralité de valeurs d'échantillon d'entrée dans chaque sous-intervalle de manière équilibrée ;
   un quatrième module de traitement (304), utilisé pour faire défiler des combinaisons de valeurs d'échantillon d'entrée de chaque paramètre d'entrée du modèle, et utiliser le modèle non linéaire pour obtenir une combinaison de valeurs d'échantillon de sortie correspondant à chaque combinaison de valeurs d'échantillon d'entrée ; et
   un cinquième module de traitement (305), utilisé pour utiliser toutes les combinaisons de valeurs d'échantillon d'entrée et les combinaisons de valeurs d'échantillon de sortie correspondantes pour générer une table tensorielle à utiliser pour une simulation,
   le dispositif comprenant en outre :

   un premier module de modélisation (307), utilisé pour déterminer des données complètes de point de conception pour chaque processus sous-jacent non linéaire cible de chaque type d'équipement ; établir une formule descriptive d'un processus sous-jacent non linéaire à l'aide d'un rapport d'un paramètre de similarité pris en charge par un critère de similarité à un paramètre de similarité basé sur les données de point de conception, pour obtenir un modèle universel du processus sous-jacent non linéaire, dans lequel le modèle universel comprend un paramètre variable qui change de façon non linéaire lorsqu'un paramètre d'un état de fonctionnement réel d'une partie spécifique de l'équipement change ; construire un algorithme d'apprentissage automatique entre le paramètre de l'état de fonctionnement réel et le paramètre variable, et établir une corrélation entre l'algorithme d'apprentissage automatique et le modèle universel ; et prendre en compte les modèles universels de tous les processus non linéaires universels cibles de chaque type d'équipement et des algorithmes d'apprentissage automatique corrélés en tant que modèle universel d'un type d'équipement,
   un second module de linéarisation (308), utilisé pour, pour chaque processus sous-jacent non linéaire cible d'une partie spécifique de l'équipement du type d'équipement, obtenir des données historiques du paramètre de l'état de fonctionnement réel et du paramètre variable correspondant au processus sous-jacent non linéaire cible de la partie spécifique de l'équipement, et utiliser les données historiques pour entraîner l'algorithme d'apprentissage automatique, pour obtenir un modèle d'entraînement du paramètre variable du processus sous-jacent non linéaire cible ; remplacer le modèle d'entraînement du paramètre variable du processus sous-jacent non linéaire cible par le modèle universel du processus sous-jacent non linéaire cible, pour obtenir un modèle entraîné du processus sous-jacent non linéaire cible de la partie spécifique de l'équipement ; et prendre tous les modèles entraînés de tous les processus sous-jacents non linéaires cibles de la partie spécifique de l'équipement en tant que modèle non linéaire de la partie spécifique de l'équipement.

**8.** Dispositif de traitement de linéarisation pour modèles non linéaires selon la revendication 7, **caractérisé en ce que** le deuxième module de traitement divise la plage de valeurs de chaque paramètre d'entrée en une pluralité de sous-intervalles sur la base d'une pluralité de points d'interpolation basés sur un critère d'équilibrage.

**9.** Dispositif de traitement de linéarisation pour modèles non linéaires selon la revendication 7, **caractérisé en ce que** le troisième module de traitement détermine une pluralité de valeurs d'échantillon d'entrée dans chaque sous-intervalle de manière équilibrée sur la base d'un critère d'équilibrage.

**10.** Dispositif de traitement de linéarisation pour modèles non linéaires selon l'une quelconque des revendications 7 à 9, **caractérisé en ce qu'**il comprend en outre :
un sixième module de traitement (306), utilisé pour, pendant la simulation, exécuter une interpolation de la table tensorielle en fonction d'une valeur actuelle de chaque paramètre d'entrée, pour obtenir une valeur de sortie correspondante.

**11.** Programme informatique exécuté par un dispositif de traitement de linéarisation, dans lequel le dispositif de traitement de linéarisation comprend :
au moins une mémoire (51) et au moins un processeur (52), dans lequel :

l'au moins une mémoire (51) est utilisée pour stocker le programme informatique ; et
l'au moins un processeur (52) est utilisé pour appeler le programme informatique stocké dans l'au moins une mémoire (51) pour exécuter le procédé de traitement de linéarisation pour modèles non linéaires selon l'une quelconque des revendications 1 à 6.

**12.** Support de stockage lisible par ordinateur, comportant un programme informatique stocké en son sein ; et le programme informatique peut être exécuté par un processeur pour mettre en œuvre le procédé de traitement de linéarisation pour modèles non linéaires selon l'une quelconque des revendications 1 à 6.

Fig. 1

Fig. 2

Fig. 3

Fig. 4

Fig. 5

**REFERENCES CITED IN THE DESCRIPTION**

**Non-patent literature cited in the description**

- Neural Network-Based Modeling for A Large-Scale Power Plant. **KWANG Y LEE**. POWER ENGINEERING SOCIETY GENERAL MEETING. IEEE, 01 June 2007, 1-8